# EUROPEAN PATENT SPECIFICATION

(11) **EP 2 148 061 B1**
(45) Date of publication and mention of the grant of the patent: **08.10.2014**
(21) Application number: 08013176.6
(22) Date of filing: 22.07.2008
(51) Int. Cl.: F02B 37/007, F02B 37/16, F02B 29/04, F02M 25/07

(54) **A two-stage turbocharged combustion engine**
Zweistufiger Turboladungsverbrennungsmotor
Moteur à combustion à turbocompresseur à deux phases

(43) Date of publication of application: 27.01.2010
(73) Proprietor: Caterpillar Motoren GmbH & Co. KG, 24157 Kiel (DE)
(72) Inventor: Schlemmer-Kelling, Udo, Dr., 24113 Molfsee (DE)
(74) Representative: Kramer - Barske - Schmidtchen

(56) References cited:
- EP-A- 1 640 597
- WO-A-2004/097195
- FR-A- 2 886 340
- GB-A- 1 603 575

## Description

### Technical Field

The present disclosure refers to a two-stage turbo-charged internal combustion engine, e.g. a diesel engine, adapted to be used, e.g., in heavy-duty vehicles, ships or power stations, but not restricted to these applications.

### Background

Turbo-charging is a common means to increase torque and power of an internal combustion engine.

WO 2007/115659 A2 discloses a two-stage turbo-charger engine system with a low pressure turbo-charger and a high-pressure turbo-charger. The compressor of the high pressure turbo-charger is in series connection with the compressor of the low pressure turbo-charger connected to the intake manifold of the internal combustion engine, wherein a cooler is provided between the outlet of the second stage compressor and the manifold. The turbines of the turbo-chargers are connected in parallel to an exhaust manifold of the engine with a valve being provided between the exhaust manifold and the inlet into the turbine of the low pressure turbo-charger. The exit opening of the high pressure turbine is connected to the inlet of the low pressure turbine downstream the valve and is connected via a further pipe and a further valve, which functions as a waste gate, to the outlet of the low pressure turbine. The low pressure turbo-charger and the high pressure turbo-charger are accommodated in a common turbine housing.

GB-PS-1 603 575 discloses a two-stage turbo-charged internal combustion engine with a first-stage turbo-charger and a first cooler located on one end side of the engine and a second-stage turbo-charger and a second cooler located on the other end side of the engine. Compressed air exiting from the first-stage turbo-charger flows through the first air cooler and then through a pipe along the engine through the compressor of the second-stage turbo-charger, whereafter it passes through the second air cooler to the intake manifold of the engine. Exhaust gases are fed from an exhaust manifold to the turbine of the second-stage turbo-charger and then to the turbine stage of the first-stage turbo-charger.

EP-A-1640597, from which the preamble of independent claim 1 starts, discloses a V-6 engine, wherein the exhaust manifolds of both cylinder banks are connected via a pipe as to form one exhaust manifold. Furthermore, there are provided two turbo-chargers with their turbines being connected in parallel to a common exhaust manifold. The compressors of the turbo-chargers are connected in series to an intake manifold of the engine, so that one turbo-charger forms a first stage turbo-charger and the other turbo-charger forms a second stage turbo-charger. The compressor of the first compressor turbo-charger is connected to the second stage turbo-charger via a first cooler. The compressor of the second stage turbo-charger is connected to the intake manifold or the engine via a second cooler. The turbo-chargers and the coolers are located on a side of the engine located at one end of its crankshaft.

GB-A-1603575 discloses an internal combustion engine having two-stage turbo-charging. An in-line 8 cylinder engine is provided with a first stage turbo-charger arranged on a first side of the engine at one end of its crankshaft and a second stage turbo-charger arranged on the opposite side of the engine. The exhaust manifold of the engine is connected to the turbine of the second stage turbo-charger, the outlet of which is connected to the turbine of the first stage turbo-charger. The outlet of the compressor of the first stage turbo-charger is connected via a first cooler and an air pipe, which extends along the length of the engine to the compressor of the second stage turbo-charger, which compressor is connected to the intake manifold of the engine via a second cooler. The inlet manifold and the air pipe are two different members.

FR-A-28862340 discloses a two stage turbo-charged internal combustion engine, wherein the exhaust manifold is connected to the inlet of the turbine of the first stage turbo-charger and the inlet of the turbine of the second stage turbo-charger via a three way valve. The outlet of the compressor of the second stage turbo-charger is connected to the turbine of the first stage turbo-charger. The outlet of the compressor of the first stage turbo-charger is connected to the inlet of the compressor of the second stage turbo-charger via first cooler. The outlet of the compressor of the second stage turbo-charger is connected to the intake manifold of the engine via a second cooler. The first and second cooler are integrated into one housing.

WO2004/09715A discloses a dual stage turbo-charged combustion engine with turbines and compressors of the turbo-chargers being connected in series to the engine.

The present disclosure is directed, at least in part, to improving or overcoming one or more aspects of prior two-stage turbo-charged internal combustion engines, as, e.g., mounting effort, complexity and/or efficiency.

### Summary of the Disclosure

According to the present disclosure a two-stage turbo-charged internal combustion engine comprises a crankcase accommodating a crankshaft cooperating with a plurality of pistons, and having a first end and a second end located opposite the first end. A crankcase accommodates the crankshaft. The crankcase has a first side located at the first end of the crankshaft and a second side located at the second end of the crankshaft, and has a plurality of cylinders in each of which one of the pistons being arranged. An intake manifold is to feed fresh air into the cylinders. An exhaust manifold is configured to discharge exhaust gas from the cylinders. At least one first stage turbo-charger and a first cooler are arranged on the first side of the crankcase. The first stage turbo-charger includes a compressor and a turbine. The compressor has an inlet opening and an outlet opening. The turbine has an inlet opening and an outlet opening. The first cooler has an inlet opening and an outlet opening. At least one second stage turbo-charger and a second cooler are arranged on the second side of the crankcase. The second stage turbo-charger includes a compressor and a turbine. The compressor has an inlet opening and an outlet opening. The turbine has an inlet opening and an outlet opening. The second cooler has an inlet opening and an outlet opening. A fresh air inlet is connected to the inlet opening of the compressor of the first stage turbo-charger. The outlet opening of the compressor of the first stage turbo-charger connects to the inlet opening of the first cooler. The outlet opening of the first cooler connects to the inlet opening of the compressor of the second stage turbo-charger. The outlet opening of the compressor of the second turbo-charger connects to the inlet opening of the second cooler. The outlet opening of the second cooler connects to the intake manifold, and the exhaust manifold connects to the inlet openings of the turbines of the at least one first stage turbo-charger and the at least one second stage turbo-charger. A duct is provided, which is divided into a first passage connecting the outlet opening of the first cooler to the inlet opening of the compressor of the second stage turbo-charger and a second passage constituting the intake manifold.

### Brief Description of the Drawings

The accompanying drawings, which are incorporated herein and constitute part of the specification, illustrate exemplary embodiments of the disclosure and, together with the description, serve to explain the principles of the disclosure. In the drawings:

Fig. 1 is a schematic top view of an exemplary embodiment of the present disclosure,

Fig. 2 is a schematic side view of the exemplary embodiment of Fig. 1,

Fig. 3 is a schematic top view of an exemplary embodiment of a V-type engine, and

Fig. 4 is a schematic sectional view of the engine of Fig. 3 as cut in plane IV-IV in Fig. 3.

### Detailed Description

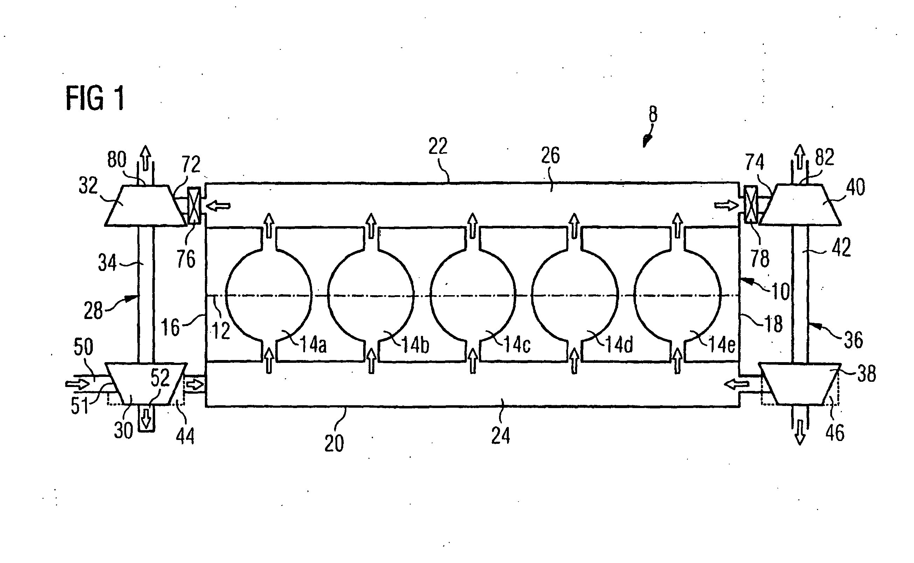

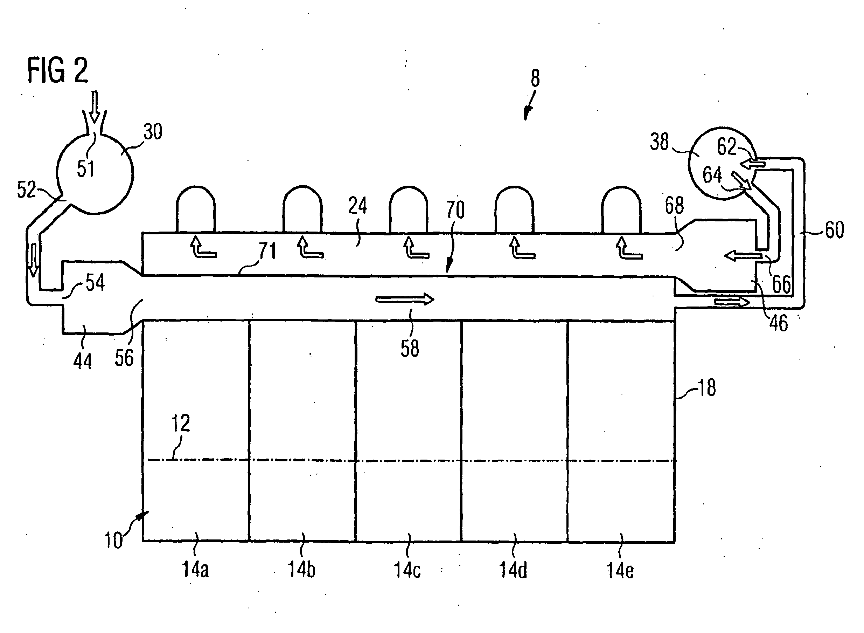

An exemplary embodiment of a two-stage turbo-charged internal combustion engine will be described in the following with reference to Figs. 1 and 2. The same reference numerals are used for corresponding elements.

An internal combustion engine 8, e.g. an inline five cylinder engine, comprises a crankcase 10 within which a crankshaft 12 is supported. The crankshaft is indicated by a double-dotted line. The crankshaft 12 is connected to pistons (not shown) which are movable back and forth within respective cylinders 14a-14e.

The engine 8 as illustrated in the drawings is a five cylinder inline engine with end sides 16, 18 being opposite in the lengthwise direction of the crankshaft 12 and sides 20, 22 being opposite in a direction orthogonal to the lengthwise direction of the crankshaft 12.

An intake manifold 24 extends along the side 20 of the engine and is connected to each of the cylinders 14a-14e. Each of the cylinders 14a-14e are provided with an inlet valve, which is adapted to open or close the connection between the intake manifold 24 and a working chamber of the respective cylinder 14a-14e.

At the other side 22 an exhaust manifold 26 is provided, which is connected to each of the cylinders 14a-14e. Each of the cylinders 14a-14e are provided with an exhaust valve configured to open and close the connection between the working chamber within the respective cylinder 14a-14e and the exhaust manifold 26.

At one of the end sides 16, 18, in the illustrated embodiment at the side 16, there may be located a first stage or a low pressure turbo-charger 28 with a compressor 30 and a turbine 32, connected via a shaft 34. At the other end side 18 there is located a second stage or a high pressure turbo-charger 36 with a compressor 38 and a turbine 40 connected via a shaft 42.

Furthermore, at the end side 16 there may be provided a first cooler 44 and at the other end side 18 there may be provided a second cooler 46. The coolers may e.g. be of a type, wherein air flowing through the cooler is cooled by a heat exchanger. The heat exchanger may be supplied with cooling water of a cooling system of the engine or is flown through by cold fresh air, driven through the heat exchanger by a blower.

The connection between the cited elements or functional units is as follows. Fresh air from the outside, which preferably is cleaned by an air filter, flows through a fresh air inlet 50 to an inlet opening 51 of the compressor 30 and exits from an outlet opening 52 of the compressor 30 to an inlet opening 54 of the first cooler 44 and exits the first cooler 44 through its outlet opening 56, which is connected to a passage 58, which extends along the crankcase 10.

At the end side 18 of the crankcase 10 the passage 58 is connected to a pipe 60 which may lead to an inlet opening 62 of the compressor 38 of the second stage turbo-charger 36. An outlet opening 64 of the compressor 38 is connected to an inlet opening 66 of the second cooler 46. At the side 18 of the crankcase 10 an outlet opening 68 of the second cooler 46 is connected to the intake manifold 24.

In an exemplary embodiment of the present disclosure, the intake manifold 24 and the passage 58 are formed within a duct 70 which is a one-piece part of the crankcase 10 and is divided by a separating wall 71 into the passage 58 and a further passage, which forms the intake manifold 24.

As can be seen especially from Fig. 1, the exhaust manifold 26 is connected at each of it ends to an inlet opening 72, 74 of the respective turbine 32 or 40. The connection between the exhaust manifold 26 and the respective turbine 32 or 40 can, e.g., be controlled by a respective valve 76 or 78, which are of any type which is configured to change a flow-through cross section from a maximum value to a minimum value, preferably continuously, wherein the minimum value may be a cross sectional area of, e.g., about zero.

Outlet openings 80, 82 of the turbines 32, 40 are preferably connected to a common exhaust pipe, which may include an exhaust purification means as a catalyst and/or a particle filter.

The basic functions of the devices as described are commonly known and therefore will not be described specifically.

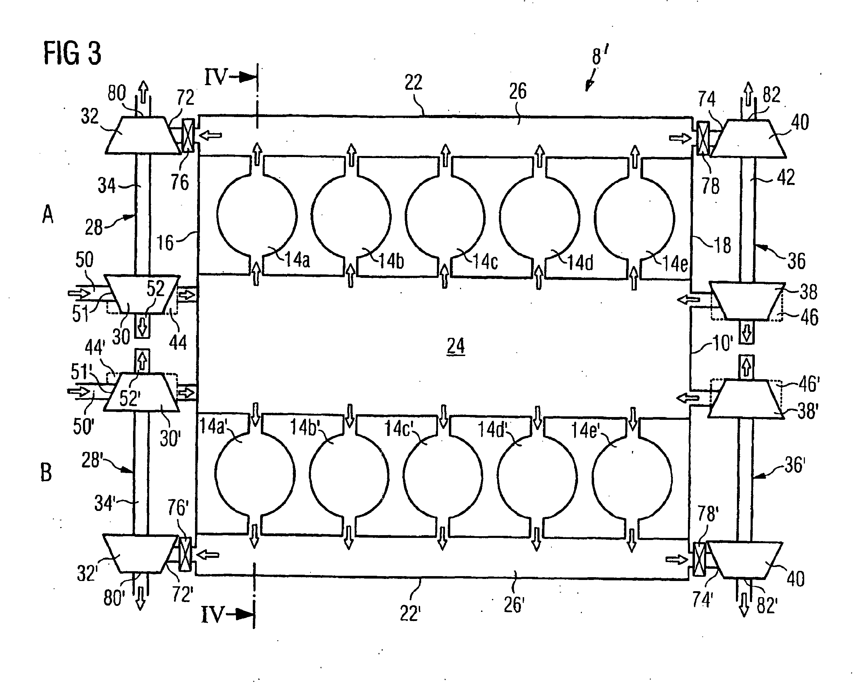

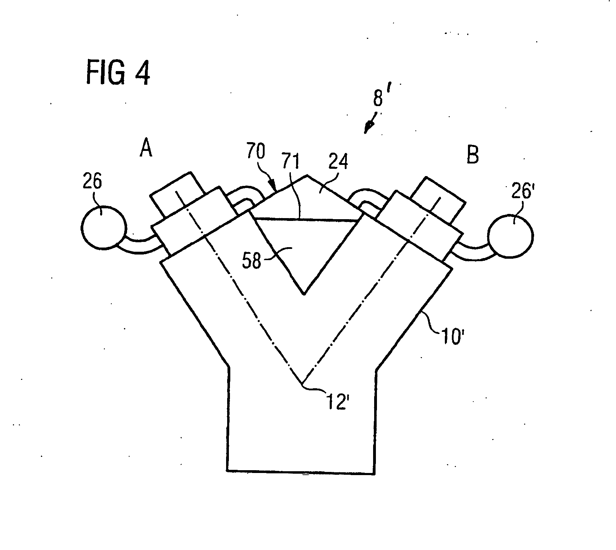

As can be seen in Fig. 3 and 4, another exemplary embodiment of the present disclosure refers to a V-type engine 8'. The shown V-type engine comprises two cylinder banks A, B, each of them including a plurality of cylinders, e.g., five cylinders. For the devices and members of cylinder bank A, which in many details correspond to the inline engine of Fig. 1, the same reference numerals as in Fig. 1 are used. For those parts of the second cylinder bank B corresponding to parts of the first cylinder bank A, the same reference numerals are used with an additional dash. In the following only those features of the V-type engine, which are different from the inline engine as already described, are explained.

The crankcase 10' includes the cylinder banks A and B, the pistons of which are connected via connecting-rods to a crankshaft 12' (see, e.g., Fig. 4), which may be common for both cylinder banks A and B. A duct 70, which preferably forms a one-piece part of a crankcase 10' is disposed between the cylinder banks A and B and may be divided by a separating wall 71 into a passage 58 and an intake manifold 24. The outlet openings of the first coolers 44, 44' are connected via the common passage 58 to the inlet openings of the compressors 38, 38' of the second stage turbo-chargers 36, 36'.The outlet openings of the second coolers 46, 46', which are downstream of compressors 38, 38' are connected to the intake manifold 24, which is common for all cylinders 14a to 14e and 14a' to 14e'.

Fresh air inlets 50, 50', of course, are connected on their upstream side to a common filter for filtering fresh air. Similarly, outlet openings 80, 80', 82, 82' are connected at their downstream side to a common exhaust gas purification system.

### Industrial Applicability

With the engine 8 as described, fresh air is compressed by a compressor 30 to a first pressure. The compressed air is cooled in the first cooler 44 and is then further compressed to a pressure higher than the first pressure by a compressor 38 of the second stage compressor. The highly compressed air is cooled in the second stage cooler 46 and then fed to the cylinders 14a-14e of the engine 8.

In case of a direct injection diesel engine, fuel is injected into the cylinders, when the respective pistons are near to their top dead center and thermal energy, which is generated when the fuel air mixture burns, is converted to mechanical energy, which can be taken from the crankshaft 12. Exhaust gas is used to drive the turbines 32, 40 of the first stage and second stage compressors.

Depending on the speed and load condition of the engine the valves 76, 78 may be actuated such that e.g. at a low load and low speeds only one of the turbo-chargers is used and that on an intermediate load range of the engine the other turbo-charger is used and that at high load both turbo-chargers are used.

By integrating the passage 58 and the intake manifold 24 into one duct 70, which is an element formed or cast integrally and/or within the crankcase 10, the available space is used efficiently. Furthermore, the separating wall 71, which separates passage 58 from the intake manifold 24 is used as a heat exchanger, which acts to make the temperature of the low pressurized fresh air, flowing through the passage 58 similar to the temperature of the high pressurized air, flowing through the intake manifold 24. Preferably the passage 58 is located below the intake manifold 24.

Mounting of the first stage turbo-charger 28 and the first compressor 30 at one end face of the engine and mounting the second stage turbo-charger 36 and the second cooler 46 at the opposite end face 18 is advantageous, because no heavy and bulky units have to be mounted and the piping connections between the different parts are short with the exception of the integrated passage 58.

The presented design of two-stage turbo-charging and its assembly to crankcases of internal combustion engines is adapted to inline engines with different numbers of cylinders as well as to other type of engines, e.g., V-type engines 8' with two lines of cylinders as shown in Figs. 3 and 4.

The engine is a diesel engine, an Otto engine or a gas engine.

Instead of the two valves 76, 78 of Fig. 1 only one valve at one side of the engine may be provided. Furthermore, exhaust gas exiting from one turbine can be used to drive the other turbine before exiting the outer atmosphere. The first stage cooler 44 is directly connected to the intake manifold 24 or to the inlet of the second stage cooler 46 to bypass the second stage turbo-charger 36. Furthermore, the inlet opening 62 of the second stage turbo-charger 36 is connected directly to the air inlet of the engine, so that the first stage turbo-charger 28 and the first cooler 44 are bypassed.

As can be seen especially from Fig. 2, a turbo-charger and a cooler can be combined to one assembly, which is mounted to the crankcase 10, e.g. by a flange provided at the receptive cooler.

Although the preferred embodiments of the disclosure have been described, improvements and modifications are incorporated without departing from the scope of the following claims. The inventive two-stage turbo-charged combustion engine may be used for a lot of purposes, e.g. as a drive of vehicles, ships or power stations.

The internal combustion engine is an inline engine with one turbo-charger mounted at said first side and one turbo-charger mounted at said second side of the engine.

According to a further aspect the internal combustion engine is a V-type engine with one turbo-charger at each side of each cylinder bank and one cooler at each side of the engine.

According to a further aspect, a duct, which is integrated within a crankcase of the internal combustion engine is divided into two passages with a first passage connecting the outlet opening of the first cooler to the inlet opening of the compressor of the second stage turbo-charger and a second passage constituting the intake manifold.

According to a further aspect of the present disclosure a valve is provided in at least one of two connections between the exhaust manifold and the turbines of the turbo-chargers, which valve is adapted to control the effective flow through cross section of the connection.

Outlet openings of the turbines of the turbo-chargers are connected in parallel to the exterior.

The V-type engine 8' shown in Figs. 3 and 4 is modified in many respects. Some modifications will be described without restricting the modifications to further embodiments. Passages 58 and/or intake manifold 24 are divided by further separating walls in their lengthwise direction, so that the two cylinder banks A and B are separated from each other within the duct 70.

Instead of a separate cooler for each turbo-charger a common cooler is used downstream of both compressors 30, 30' of the first stage turbo-chargers 28, 28', i.e. the outlet openings 52, 52' are connected to a common first stage cooler, which is connected to the passage 58. At the opposite side also one common cooler is used for cooling the compressed air exiting from the compressors 38, 38' of the second stage turbo-chargers 36, 36'. The outlet of this common cooler is connected to the intake manifold 24. Furthermore, one compressor is used instead of compressors 30, 30' and/or one compressor may be used instead of compressors 38, 38'. These compressors are driven by separated turbines 32, 32' respectively 40, 40' or also common compressors are used. This means that one first stage turbo charger is used for both cylinder banks and one second stage turbo charger is used for both cylinder banks. Furthermore, both cylinder banks A, B are designed such that a common exhaust manifold is used by both cylinder banks, i.e. that the exhaust manifold is disposed between the cylinder banks and that separated ducts 70 are used by the cylinder banks, which ducts are disposed at the outer sides 22, 22' of the engine. Of course with this design the compressors and turbines of the turbo-chargers have been disposed accordingly.

## Claims

1. A turbocharged internal combustion engine comprising:
a crankshaft (12) cooperating with a plurality of pistons working within cylinders,
a first stage turbo-charger (28) and a first cooler (44),
a second stage turbo-charger (36) and a second cooler (46),
wherein
an air inlet (50) is connected to an inlet opening (51) of the compressor (30) of the first stage turbo-charger (28),
an outlet opening (52) of the compressor (30) of the first stage turbo-charger (28) is connected to an inlet opening (54) of the first cooler (44),
an outlet opening (56) of the first cooler (44) is connected to an inlet opening (62) of the compressor (38) of the second stage turbo-charger (36),
an outlet opening (64) of the compressor (38) of the second stage turbo-charger (36) is connected to an inlet opening (66) of the second cooler (46),
an outlet opening (68) of the second cooler (46) is connected to an intake manifold (24) of the engine, and
inlet openings (72, 74) of the turbines (32, 40) of both turbo-chargers (28, 36) are connected in parallel to an exhaust manifold (26) of the engine,
**characterized in that**
said first stage turbo-charger (28) and said first cooler (44) are arranged on a first side (16) of the engine located at one end of the crankshaft (12),
said second stage turbo-charger (36) and said second cooler (46) are located on a second side (18) of the engine opposite to said first side and a duct (70) is provided, which is divided into a first passage (58) connecting the outlet opening (56) of the first cooler (44) to the inlet opening (62) of the compressor (38) of the second stage turbo-charger (36) and a second passage constituting the intake manifold (24).

2. A turbo-charged internal combustion engine according to claim 1, wherein the duct (70) is a one-piece part of a crankcase (10) of the engine.

3. A turbo-charged internal combustion engine according to claim 1 or 2, wherein the duct (70) is integrally cast with the crankcase (10).

4. A turbo-charged internal combustion engine according to any of claims 1 to 3, wherein the first passage (58) is disposed below the intake manifold (24).

5. A turbo-charged engine according to any of claims 1 to 4, wherein the engine is an in-line engine with one first stage turbo-charger (28) and one first cooler (44) arranged on said first side (16) of the engine and one second stage turbo-charger (36) and one second cooler (46) arranged on said second side (18) of the engine.

6. A turbo-charged internal combustion engine according to any of claims 1 to 4, wherein the internal combustion engine is a V-type engine (8') with two first stage turbo-chargers (28, 28') and one first cooler (44) arranged on said first side (16) of the engine with one of the two first stage turbo-chargers (28, 28') being located at the corresponding side of each cylinder bank (A, B) and with two second stage turbo-chargers (36, 36') and one second cooler (78) arranged on said second side (18) of the engine with one of the two second stage turbo-chargers (36, 36') being located at the corresponding side of each cylinder bank (A, B), wherein the outlet openings of the compressors (30, 30') of the two first stage turbo-chargers (28, 28') are connected to the inlet opening of the first cooler (44) and the outlet openings of the compressors (38, 38') of the second stage turbo-chargers (36, 36') are connected to the inlet opening of the second cooler (46).

7. A turbo-charged internal combustion engine according to claim 6, wherein the outlet opening of the first cooler (44) is connected to the inlet openings of the second stage turbo-chargers (36, 36') by the first passage (58) of the duct (70).

8. A turbo-charged internal combustion engine according to claim 7, wherein the duct (70) is disposed between the cylinder banks (A, B) of the engine (8').

9. A turbo-charged internal combustion engine according to any of claims one or more of the preceding claims, wherein a pressure at an outlet of the compressor (32) of the first stage turbo-charger (28) is lower than the pressure at the outlet of the compressor (38) of the second stage turbo-charger (36).

10. A two stage combustion engine according to one or more of the preceding claims, wherein a valve (76, 78) is provided in at least one of the two connections between the exhaust manifold (22) and the turbines (32, 40) of the turbo-chargers (28, 36), which valve is adapted to control the effective flow through cross section of the connection.

## Patentansprüche

1. Turboaufgeladene Brennkraftmaschine mit:
einer Kurbelwelle (12), die mit einer Vielzahl an in Zylindern arbeitenden Kolben zusammenwirkt,
einem Turbolader der ersten Stufe (28) und einem ersten Kühler (44),
einem Turbolader der zweiten Stufe (36) und einem zweiten Kühler (46),
wobei
ein Lufteinlass (50) mit einer Einlassöffnung (51) des Kompressors (30) des Turboladers der ersten Stufe (28) verbunden ist,
eine Auslassöffnung (52) des Kompressors (30) des Turboladers der ersten Stufe (28) mit einer Einlassöffnung (54) des ersten Kühlers (44) verbunden ist,
eine Auslassöffnung (56) des ersten Kühlers (44) mit einer Einlassöffnung (62) des Kompressors (38) des Turboladers der zweiten Stufe (36) verbunden ist,
eine Auslassöffnung (64) des Kompressors (38) des Turboladers der zweiten Stufe (36) mit einer Einlassöffnung (66) des zweiten Kühlers (46) verbunden ist,
eine Auslassöffnung (68) des zweiten Kühlers (46) mit einem Ansaugkrümmer (24) des Motors verbunden ist, und
Einlassöffnungen (72, 74) der Turbinen (32, 40) der beiden Turbolader (28, 36) parallel mit einem Abgaskrümmer (26) des Motors verbunden sind,
**dadurch gekennzeichnet, dass**
der Turbolader der ersten Stufe (28) und der erste Kühler (44) an einer an einem Ende der Kurbelwelle (12) befindlichen ersten Seite (16) des Motors angeordnet sind,
sich der Turbolader der zweiten Stufe (36) und der zweite Kühler (46) an einer der ersten Seite gegenüberliegenden zweiten Seite (18) des Motors befinden und ein Kanal (70) vorhanden ist, der in einen ersten Abschnitt (58), welcher die Auslassöffnung (56) des ersten Kühlers (44) mit der Einlassöffnung (62) des Kompressors (38) des Turboladers der zweiten Stufe (36) verbindet, und in einen zweiten Abschnitt, welcher den Ansaugkrümmer (24) darstellt, unterteilt ist.

2. Turboaufgeladene Brennkraftmaschine nach Anspruch 1, wobei der Kanal (70) ein einstückiges Bauteil eines Kurbelwellengehäuses (10) des Motors ist.

3. Turboaufgeladene Brennkraftmaschine nach Anspruch 1 oder 2, wobei der Kanal (70) integral mit dem Kurbelwellengehäuse (10) gegossen ist.

4. Turboaufgeladene Brennkraftmaschine nach einem der voranstehenden Ansprüche 1 bis 3, wobei der erste Abschnitt (58) unterhalb des Ansaugkrümmers (24) angebracht ist.

5. Turboaufgeladener Motor nach einem der voranstehenden Ansprüche 1 bis 4, wobei der Motor ein Reihenmotor ist mit einem Turbolader der ersten Stufe (28) und einem ersten Kühler (44), die an der ersten Seite (16) des Motors angeordnet sind, und mit einem Turbolader der zweiten Stufe (36) und einem zweiten Kühler (46), die an der zweiten Seite (18) des Motors angeordnet sind.

6. Turboaufgeladene Brennkraftmaschine nach einem der voranstehenden Ansprüche 1 bis 4, wobei die Brennkraftmaschine ein V-Motor (8') ist mit zwei Turboladern der ersten Stufe (28, 28') und einem ersten Kühler (44), die an der ersten Seite (16) des Motors angeordnet sind, wobei sich einer der zwei Turbolader der ersten Stufe (28, 28') an der entsprechenden Seite der jeweiligen Zylinderreihe (A, B) befindet, und mit zwei Turboladern der zweiten Stufe (36, 36') und einem zweiten Kühler (78), die an der zweiten Seite (18) des Motors angeordnet sind, wobei sich einer der zwei Turbolader der zweiten Stufe (36, 36') an der entsprechenden Seite der jeweiligen Zylinderreihe (A, B) befindet, und wobei die Auslassöffnungen des Kompressors (30, 30') der zwei Turbolader der ersten Stufe (28, 28') mit der Einlassöffnung des ersten Kühlers (44) verbunden sind und die Auslassöffnungen des Kompressors (38, 38') der Turbolader der zweiten Stufe (36, 36') mit der Einlassöffnung des zweiten Kühlers (46) verbunden sind.

7. Turboaufgeladene Brennkraftmaschine nach Anspruch 6, wobei die Auslassöffnung des ersten Kühlers (44) mit den Einlassöffnungen der Turbolader der zweiten Stufe (36, 36') über den ersten Abschnitt (58) des Kanals (70) verbunden sind.

8. Turboaufgeladene Brennkraftmaschine nach Anspruch 7, wobei der Kanal (70) zwischen den Zylinderreihen (A, B) des Motors (8') angebracht ist.

9. Turboaufgeladene Brennkraftmaschine nach einem oder mehreren der voranstehenden Ansprüche, wobei der Druck an einem Auslass des Kompressors (32) des Turboladers der ersten Stufe (28) geringer als der Druck an dem Auslass des Kompressors (38) des Turboladers der zweiten Stufe (36) ist.

10. Zweistufiger Verbrennungsmotor nach einem oder mehreren der voranstehenden Ansprüche, wobei zumindest eines der beiden Verbindungsstücke zwischen dem Auslasskanal (22) und den Turbinen (32, 40) der Turbolader (28, 36) mit einem Ventil (76, 78) versehen ist, das dazu angepasst ist, den effektiven Strom durch einen Querschnitt des Verbindungsstücks zu steuern.

## Revendications

1. Moteur turbocompressé à combustion interne comprenant :
un vilebrequin (12) coopérant avec une pluralité de pistons travaillant dans des cylindres,
un turbocompresseur de premier étage (28) et un premier refroidisseur (44),
un turbocompresseur de deuxième étage (36) et un deuxième refroidisseur (46),
dans lequel
une entrée d'air (50) est connectée à une ouverture d'entrée (51) du compresseur (30) du turbocompresseur de premier étage (28),
une ouverture de sortie (52) du compresseur (30) du turbocompresseur de premier étage (28) est connectée à une ouverture d'entrée (54) du premier refroidisseur (44),
une ouverture de sortie (56) du premier refroidisseur (44) est connectée à une ouverture d'entrée (62) du compresseur (38) du turbocompresseur de deuxième étage (36),
une ouverture de sortie (64) du compresseur (38) du turbocompresseur de deuxième étage (36) est connectée une ouverture d'entrée (66) du deuxième refroidisseur (46),
une ouverture de sortie (68) du deuxième refroidisseur (46) est connectée à un collecteur d'admission (24) du moteur, et
des ouvertures d'entrée (72, 74) des turbines (32, 40) des deux turbocompresseurs (28, 36) sont connectées en parallèles à un collecteur d'échappement (26) du moteur,
**caractérisé par le fait que**
ledit turbocompresseur de premier étage (28) et ledit premier refroidisseur (44) sont disposés sur un premier côté (16) du moteur situé à une extrémité du vilebrequin (12),
ledit turbocompresseur de deuxième étage (36) et ledit deuxième refroidisseur (46) sont situés sur un deuxième côté (18) du moteur à l'opposé dudit premier côté, et un conduit (70) est prévu, lequel est divisé en un premier passage (58) connectant l'ouverture de sortie (56) du premier refroidisseur (44) à l'ouverture d'entrée (62) du compresseur (38) du turbocompresseur de deuxième étage (36) et un deuxième passage formant le collecteur d'admission (24).

2. Moteur turbocompressé à combustion interne selon la revendication 1, dans lequel le conduit (70) est une pièce monobloc d'un carter (10) du moteur.

3. Moteur turbocompressé à combustion interne selon la revendication 1 ou 2, dans lequel le conduit (70) est intégralement moulé avec le carter (10).

4. Moteur turbocompressé à combustion interne selon l'une quelconque des revendications 1 à 3, dans lequel le premier passage (58) est disposé au-dessous du collecteur d'admission (24).

5. Moteur turbocompressé à combustion interne selon l'une quelconque des revendications 1 à 4, dans lequel le moteur est un moteur en ligne avec un turbocompresseur de premier étage (28) et un premier refroidisseur (44) agencés sur ledit premier côté (16) du moteur et un turbocompresseur de deuxième étage (36) et un deuxième refroidisseur (46) agencés sur ledit deuxième côté (18) du moteur.

6. Moteur turbocompressé à combustion interne selon l'une quelconque des revendications 1 à 4, dans lequel le moteur à combustion interne est un moteur de type en V (8') avec deux turbocompresseurs de premier étage (28, 28') et un premier refroidisseur (44) disposés sur ledit premier côté (16) du moteur avec l'un des deux turbocompresseurs de premier étage (28, 28') situé sur le côté correspondant de chaque rangée de cylindres (A, B) et deux turbocompresseurs de deuxième étage (36, 36 ') et un deuxième refroidisseur (78) disposés sur ledit deuxième côté (18) du moteur avec l'un des deux turbocompresseurs de deuxième étage (36, 36') situé sur le côté correspondant de chaque rangée de cylindres (A, B), dans lequel les ouvertures de sortie des compresseurs (30, 30') des deux turbocompresseurs de premier étage (28, 28') sont connectées à l'ouverture d'entrée du premier refroidisseur (44) et les ouvertures de sortie des compresseurs (38, 38') des turbocompresseurs de deuxième étage (36, 36') sont connectées à l'ouverture d'entrée du deuxième refroidisseur (46).

7. Moteur turbocompressé à combustion interne selon la revendication 6, dans lequel l'ouverture de sortie du premier refroidisseur (44) est connectée aux ouvertures d'entrée des turbocompresseurs de deuxième étage (36, 36') par le premier passage (58) du conduit (70).

8. Moteur turbocompressé à combustion interne selon la revendication 7, dans lequel le conduit (70) est disposé entre les rangées de cylindres (A, B) du moteur (8').

9. Moteur turbocompressé à combustion interne selon l'une ou plusieurs des revendications précédentes, dans lequel une pression à une sortie du compresseur (32) du turbocompresseur de premier étage (28) est inférieure à la pression à la sortie du compresseur (38) du turbocompresseur de deuxième étage (36).

10. Moteur à combustion interne à deux étages selon l'une ou plusieurs des revendications précédentes, dans lequel une vanne (76, 78) est prévue dans au moins l'une des deux connexions entre le collecteur d'échappement (22) et les turbines (32, 40) des turbocompresseurs (28, 36), laquelle vanne est adaptée pour contrôler le débit effectif à travers la section transversale de la connexion.
